# EUROPEAN PATENT APPLICATION

(11) **EP 2 574 069 A1**
(43) Date of publication of application: **27.03.2013**
(21) Application number: 12006065.2
(22) Date of filing: 23.08.2012
(51) Int. Cl.: H04N 21/41, H04N 21/443, H04N 21/442, H04L 12/26

(54) **Contents sharing method and display apparatus using the same**

(30) Priority: 26.09.2011 KR 20110096860
(71) Applicant: LG Electronics Inc., Seoul (KR)
(72) Inventor: Kim, Soyoung, Seocho-gu, 137-724 Seoul (KR); Kim, Ryoung, Seocho-gu, 137-724 Seoul (KR)
(74) Representative: Thum, Bernhard

(57) **Abstract**

Disclosed herein are a contents sharing method and a image display device using the same, wherein the method comprises displaying an object for sharing a content that is being reproduced with an external image display device, when the object is selected searching for external image display devices capable of sharing contents, indicating a sharing device list including at least one of the searched external image display devices, selecting at least one external image display device from the displayed sharing device list, and displaying shared state information on at least one of the image display device and the selected external image display device.

## Description

### Background of the Invention

### 1. Technical Field

The present invention relates to a method of sharing contents with an external device in an image display device.

### 2. Description of the Related Art

As a digital TV having signal-processing and storage capabilities superior to those of an existing analog TV and a wire/wireless network technology have been developed and commercialized, it is possible to provide various kinds of content services, such as real-time broadcasting, contents on demand(COD), games, news, image communication, or the like, to users using internet networks in addition to existing transmission media.

As an example of content service using internet networks, an internet protocol TV (IPTV) may be provided. The IPTV is an application to transmit various information services, moving picture contents, broadcasting contents, or the like, using very high speed internet networks to user's TV.

In addition, an image display device such as the digital TV may be connected to an outer image display device such as another TV, a smartphone, a PC, a tablet PC, or the like, thereby making it possible to share a content that is being played or stored in the IPTV with the outer image display device.

### Summary of the Invention

An object of the prevent invention is to provide a contents sharing method capable of effectively sharing contents among image display devices and an image display device using the same.

In order to achieve the object, a contents sharingmethod according to an embodiment of the present invention comprises displaying an object for sharing a content that is being reproduced with an external image display device, when the object is selected searching for external image display devices capable of sharing contents, displaying a sharing device list including at least one of the searched external image display devices, selecting at least one external image display device from the displayed sharing device list, and displaying shared state information on at least one of the image display device and the selected external image display device.

An image display device according to another exemplary embodiment of the present invention comprises: a display unit displaying an object for sharing a content that is being reproduced with an external image display device and, when the object is selected, displaying a sharing device list including at least one of external image display devices capable of sharing contents, a control unit searching for external image display devices capable of sharing contents and configuring the sharing device list, a user interface unit which at least one external image display device is selected from the sharing device list by the user input; and a network interface unit transmitting the content that is being reproduced to the selected external image display device or a contents sharing server.

The contents sharing method may be implemented by a recording medium in which a computer program capable of running in a computer is recorded and which the computer is able to read.

### Brief description of the drawings

The above and other objects, features and advantages of the present invention will be more clearly understood from the following detailed description taken in conjunction with the accompanying drawings, in which:
- FIG. 1: is a block diagram showing a first exemplary embodiment of a configuration of a contents sharing system;
- FIG. 2: is a block diagram showing a second exemplary embodiment of a configuration of the contents sharing system;
- FIG. 3: is a block diagram showing a configuration of an image display device according to an exemplary embodiment of the present invention;
- FIG. 4: is a flow chart showing a contents sharing method according to an exemplary embodiment of the present invention;
- FIG.S. 5 to 9: are diagrams showing exemplary embodiments of user interfaces being provided to users in order to share contents; and
- FIGS. 10 to 13: are diagrams showing exemplary embodiments of methods of displaying content shared-state information.

### Description of the preferred embodiments

Hereinafter, the contents sharing method and the image display device using the same will be described with reference to accompanying drawings.

Although exemplary embodiments of the present invention will be described below in detail with reference to accompanying drawings and contents described with respect to the drawings, the present invention is not limited thereto.

Terms used in the present specification are chosen as generally widely used terms with consideration of functions of the present invention, but they may be altered according to an intention of those skilled in the art or a practice, appearance of a new technology, or the like. In addition, in some cases, there are terms that the applicant has arbitrarily selected. In this case, the meaning thereof will be defined in each corresponding section where the terms are described. Therefore, terms used in the present specification are to be interpreted based on meanings which the terms substantially has and contents throughout the specification rather than simple meanings of the terms.

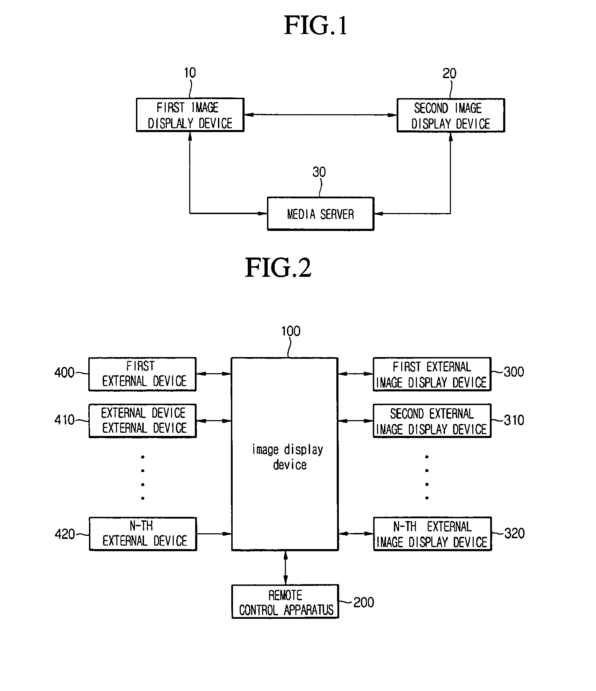

FIG. 1 is a block diagram showing a first exemplary embodiment of a configuration of a contents sharing system. The system shown in FIG. 1 may be configured to include a plurality of image display devices 10 and 20.

Referring to FIG. 1, a first image display device 10 and a second image display device 20 are connected to each other through wire/wireless networks to transmit and receive content data to and from each other, thereby making it possible to share specific contents between each other.

For example, the first and second image display devices 10 and 20 may be connected to each other using various communication protocols such as Digital Living Network Alliance (DLNA), Wireless LAN (WiFi), Wireless HD (WiHD), Wireless Home Digital Interface (WHDi), Bluetooth, ZigBee, binary Code Division Multiple Access (CDMA), Digital Interactive Interface for Video & Audio, and the like, thereby making it possible to transmit and receive content data to and from each other.

In addition, the first and second image display devices 10 and 20 may be each connected to a media server 30 through the wire/wireless network such as an internet to transmit and receive content data through the media server 30, thereby also making it possible to share contents between each other.

Meanwhile, each of the first and second image display devices 10 and 20 may be digital TV such as a network TV, a HGGTV, a smart TV, or the like, or various appliances such as a PC, a notebook computer, mobile telecommunication devices such as a smartphone, a tablet PC, or the like.

When the contents sharing system is used as described above with reference to FIG. 1 , an "N-screen" service, which allows a content to be seamlessly used in various appliances such as the TV, the PC, the tablet PC, the smartphone, or the like" may be provided.

For example, the user may continuously watch a broadcasting program or movie that he or she has watched on TV on other kind of display device such as a smartphone or tablet PC, and may see additional information in regard to a drama on the smartphone or tablet PC while watching the corresponding drama.

By using the 'N-screen' service as described above, a content file may be shared between the first and second image display devices 10 and 20 (file share) or a screen, it self, of an image display device also may be shared between image display devices (screen share).

To this end, according to the user's demands, the first image display device 10 may transmit contents that have been received from outside or stored in the device 10 to the second image display device 20 using various communication modes.

In addition, the user may store contents that he or she purchased in the media server 30 and may download the stored contents from the media server 30 through the internet. Therefore the user may use a desired image display device between the first and second image display devices 10 and 20 to reproduce the contents as needed.

FIG. 2 is a block diagram showing a second exemplary embodiment of a configuration of the contents sharing system and in the configuration of the contents sharing system shown in FIG. 2 a detailed description of the same components as those described above with reference to FIG. 1 will be omitted

Referring to FIG. 2, an image display device 100 may be connected to a plurality of external devices 400, 41, and 420, thereby making it possible to receive contents including image signals, voice signals, and the like. To this end, the image display device 100 may include input/output terminals such as HDMI, USB component, RGB terminals, or the like, in order to transmit and receive data to and from the external devices 400, 410, and 420.

For example, the external devices 400, 410, and 420 may be an image reproduction device such as a DVD player, a Dvix player, a Blue-ray player, or the like, a set-top box such as an IPTV set-top box, a cable set-top box, a satellite set-top box, or the like, or one of other various devices such as a PC, a game machine, a home-theater, a portable terminal, a hard disk driver recorder (HDD recorder), a USB memory stick, an external server, or the like.

However, the external devices 400, 410, and 420 connected to the image display device according to the present invention are not limited thereto, and may be various devices connected to the image display device 100 and capable of transmitting image signal, etc.

In addition, the image display device 100 may receive broadcasting signals using a tuner (not shown), or the like, receive contents from external devices using various communication protocols such as WiFi, WiHD, WHDi, Bluetooth, ZigBee, binary CDMA, and the like, or download contents from the media server 30 as shown in FIG. 1 using the internet.

Meanwhile, the contents received from the outside as described above may be stored in the image display device 100 or in a storage device (not shown) connected to the image display device 100 and then reproduced according to the user's demand.

According the embodiment of the present invention, while reproducing contents input from the outside or stored in the image display device 100 as described above, the image display device 100 may transmit the contents that is being reproduced to at least one of a plurality of the external image display devices 300, 310, and 320 by the demand of the user using a remote control apparatus 200 thereby making it possible to continuously reproduce the corresponding contents on other external image display device.

Here, the image display device 100 may transmit information on a content reproduction state according to demand time of the user together with the corresponding content to at least one of the plurality of the external image display devices 300, 310, and 320, thereby also making it possible to continuously reproduce the corresponding content from the demand time of the user on other external image display device.

The image display device 100 may store the information on the content reproduction state according to demand time of the user together with the corresponding content in the external device such as a set-top box or a server by the demand of the user using the remote control apparatus 200. Then, in the case in which one of the plurality of external image display devices 300, 310, and 320 is selected, the image display device 100 may transmit at least one of the corresponding content stored in the external device and the information on the reproduction state of the corresponding content to the selected external image display device.

In addition, in order to continuously reproduce the content even in an external image display device having a different resolution, the image display device 100 may also convert the resolution of the corresponding content and transmit the resolution-converted content.

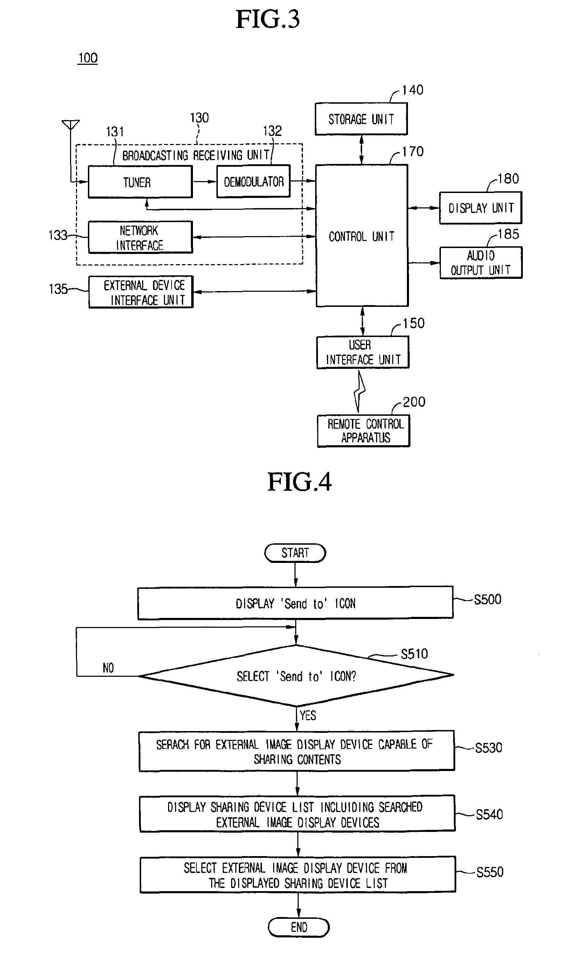

To this end, the user may use the remote control apparatus 200 to select any one of the external image display devices 300, 310, and 320 capable of sharing contents with the image display device 100. Therefore the contents may be transmitted to the selected external image display device. FIG. 3 is a block diagram showing a configuration of an image display device according to an exemplary embodiment of the present invention, wherein the image display device 100 may include a broadcasting receiving unit 130, an external device interface unit 135, a storage unit 140, a user-input interface unit 150, a control unit 170, a display unit 180, and an audio output unit 185. Meanwhile, the broadcasting receiving unit 130 may include a tuner 131, a demodulator 132, and a network interface 133.

Referring to FIG. 3, the tuner 131 may select a radio frequency (RF) broadcasting signal corresponding to a channel selected by the user or all channels already stored among RF signals received through an antenna and convert the selected RF broadcasting signals into an intermediate frequency (IF) signal or a base band image or voice signal.

The tuner 132 may receive a digital IF (DIF) signal converted in the tuner 131 to demodulate the received signal. For example, in the case in which the DIF signal output from the tuner 131 are Advanced Television Systems Committee (ATSC) signal, the demodulator 132 may demodulate 8-Vestigal side Band (8-VSB).

In addition, the demodulator 132 may also perform channel decoding. To this end, the demodulator 132 may include a trellis decoder, a de-interleaver, a reed Solomon decoder, or the like, to perform trellis decoding, de-interleaving, and reed Solomon decoding.

The demodulator 132 may output a stream signal TS after performing demodulating and channel decoding, and the stream signal may be a multiplexed signal of an image signal, a voice signal, and a data signal.

For example, the stream signal may be a multiplexed MPEG-2 transport stream (TS) of an image signal of MPEG-2 specification, a voice signal of Dolby AC-3 specification, or the like. More specifically, the MPEG-2 TS may include a 4-byte header and a 184-byte payload.

The stream signal output from the demodulator 132 may be input to the control unit 170, and the control unit 170 may perform de-multiplexing, image/voice signal process, or the like, and then may output the image to a display unit 180 and the voice to an audio output unit 185.

The external device interface unit 135 may connect the external device to the display device 100 (not shown) and, to this end, may include an A/V input/output unit (not shown), a wireless communication unit (not shown), or the like.

The external device interface unit 135 may be connected to an external device such as a digital versatile disk (DVD), a blue-ray, a game machine, a camera, a camcorder, a computer (notebook), and the like, by wired-line/wireless.

In addition, the external device interface unit 135 may transfer the image, voice, or data signal input from the outside to the control unit 170 of the display device 100 through a connected external device and output the image, voice, or date signal processed in the control unit 170 to the connected external device.

The A/V input/output unit may include a USB terminal, a composite video banking sync (CVBS) terminal, a component terminal, an S-video terminal (analog), a digital visual interface (DVI) terminal, a high definition multimedia interface (HDMI) terminal, an RGB terminal, a D-SUB terminal, and the like so that the image and voice signal may be input to the display device 100.

Meanwhile, the wireless communication unit may perform local wireless communication with other electronic device. For example, the display device 100 may be connected to other electronic device according to a communication protocol such as Bluetooth, radio frequency identification (RFID), infrared data association (IrDA), Ultra Wideband (UWB), Zigbee, Digital Living Network Alliance (DLNA), or the like.

In addition, the external interface unit 135 may be connected to various set-top boxes through at least one of various terminals described above, thereby making it possible to perform input/output operation with a set-top box.

Meanwhile, the external interface unit 135 may receive an application within an adjacent external device or an application list to transmit the application or application list to the control unit 170 or the storage unit 140.

The network interface 133 may provide an interface between the display device 100 and the wireline/wireless network including an internet network. For example, the network interface 133 may include an Ethernet terminal, and the like, in order to be connected to the wireline network and be connected to the wireless network using the communication protocol such as WiFi, WiHD, WHDi, Bluetooth, ZigBee, binary CDMA, DiiVA, Wibro, Wimax, HSDPA, or the like.

Meanwhile, the network interface 133 may transmit and receive data to and from other users or other electronic devices through a connected network or other network linked to the connected network.

In addition, the network interface 133 may transmit some content data stored in the display device 100 to other users registered with the display device 100 in advance or a selected user or electronic device of other electronic devices.

The network interface 133 may be connected to a predetermined web page through the connected network or other network linked to the connected network. That is, the network interface 133 may connect to the predetermined web page to transmit and receive data to and from the server corresponding to the web page.

In addition, network interface 133 may receive contents and data which a contents provider or a network operator provides. That is, the network interface 133 may receive contents such as movies, ads, games, broadcasting signals provided from the contents provider or network operator and information associated with the contents.

In addition, the network interface 133 may receive update information of firmware and update files provided by the network operator and transmit data to the internet or contents provider or the network operator.

The network interface 133 may select a desired application among applications open to public through the network and receive the selected application.

The storage unit 140 may store programs for processing and controlling each signal in the control unit 170 and the signal-processed image, voice, or data signal.

In addition, the storage unit 140 may also perform a function for temporary storage of the image signal, voice signal, or data signal input from the external interface 135 or the network interface unit 133 and store information on a predetermined broadcasting channel through a channel memory function.

The display device 100 may reproduce contents (motion pictures, still pictures, music, documents, applications, or the like) stored in the storage unit 140 or received from the outside through the tuner 131, the network interface 133, or the external device interface unit 135, to thereby provide the reproduced contents to users.

The user-input interface unit 150 may transfer a user-input signal to the control unit 170 or a signal from the control unit 170 to the user. For example, the user-input interface unit 150 may receive and process a control signal for controlling power on/off, channel selection, screen setting, or the like, from the remote control apparatus 200 according to various communication modes such as the radio frequency communication mode, or the like, or process control signals from the control unit 170 so as to transmit the control signal to the remote control apparatus 200.

The remote control apparatus 200 may be a camera receiving an image frame obtained by an image sensor, or an A/V input unit such as a mike receiving acoustic signals of the outside and converting the received signals into electrical voice data. The remote control apparatus 200 may be a space remote controller capable of obtaining movements in the 3D space and recognizing the movements as control signals transmitted from the user.

In addition, the user-input interface unit 150 may transfer the control signal input from a local key (not shown) such as a power key, a channel key, a volume key, a setting key, or the like, to the control unit 170.

For example, the user-input interface unit 150 may transfer the control signal input through the A/V input unit such as the image frame or voice or the control signal input from a sensing unit (not shown) sensing gestures of the users to the control unit 170, or may transmit a signal from control unit 170 to the sensing unit (not shown). Meanwhile, the sensing unit (not shown) may include a touch sensor, a voice sensor, a position sensor, a motion sensor, or the like. For example, when the user inputs the control signal in the form of voices using the remote control apparatus 200 or sensing unit (not shown) of the image display device 100, the image display device 100 may select an external image display device according to the control signal and transmit contents that is being reproduced.

The control unit 170 may de-multiplex streams input from the tuner 131 or demodulator 132 or the external device interface unit 135, or process a demultiplexed signal, thereby making it possible to generate or output a signal for outputting the image or voice.

The image signal processed in the control unit 170 may be inputted to the display unit 180 to be displayed as the image corresponding to the image signal. In addition, a signal image-processed in the control unit 170 may be input to an external output device through the external device interface unit 135.

The voice signal processed in the control unit 170 may be audio-output to an audio output unit 185. In addition, the audio signal processed in the control unit 170 may be input to the external output device through the external device interface unit 135.

Although not shown in FIG. 3, the control unit 170 may include a de-multiplexing unit, an image-processing unit, or the like.

Further, the control unit 170 may control overall operations of the display device 100. For example, the control unit 170 may control the tuner 131 so that the tuner 131 tunes an RF broadcasting corresponding to a channel selected by the user or a channel already stored.

In addition, the control unit 170 may control the display device 100 by the user's instructions input through the user-input interface unit 150 or an internal program and be connected to the network so that the user may download a desired application or application list in the display device 100.

For example, the control unit 170 may control the tuner 131 so that the signal of the channel selected according to a predetermined channel selection order received through the user-input interface unit 150 is input to the tuner 131, and process the image, voice, or data signal of the selected channel.

The control unit 170 makes it possible that channel information, or the like, selected by the user is output together with the processed image or voice signal through the display unit 180 or the audio output unit 185.

In addition, the control unit 170 makes it possible that the image signal or voice signal input from the external device, such as a camera or camcorder, through the external device interface 135 is output through the display unit 189 or audio output unit 185 according to an external device image reproduction order received through the user-input interface unit 150.

Meanwhile, the control unit 170 may control the display unit 180 so as to display images. For example, the control unit 170 may control the display unit 180 so that the broadcasting image input through the tuner 131, an external input image input through the external device interface 135, an image input through the network interface unit 133, or the image stored in the storage unit 140 is displayed on the display unit 180. In this case, the image displayed on the display unit 180 may be a still image or a motion image, or a 2D image or 3D image.

In addition, the control unit 170 may control reproduction of contents stored in the display device 100, received broadcasting contents, or external input contents input from the outside, and the contents may be various forms, such as the broadcasting image, the external input image, an audio file, the still image, a connected web screen, a document file, or the like.

According to the exemplary embodiment of the present invention, in the case in which an object for sharing a content displayed on the screen is selected by the user, the display device 100 may search for external image display devices capable of sharing the content to display the list thereof, and the user may select at least one of the external image display devices in the list.

Hereinafter, referring to FIGS. 4 to 13, a contents sharing method according to an exemplary embodiment of the present invention will be described in detail.

FIG. 4 is a flow chart showing a contents sharing method according to an exemplary embodiment of the present invention, and the contents sharing method will be described in connection with the block diagrams shown in FIGS. 2 and 3.

Referring to FIG. 4, the display device 180 of the image display device 100 displays a 'Send to' icon on the screen (step S500).

For example, during reproduction of contents on the image display device 100, the 'Send to' icon, which is an object for sharing contents with the external image display device, may be display on the screen of the image display device 100 responding to the demand of the user using the remote control apparatus 200.

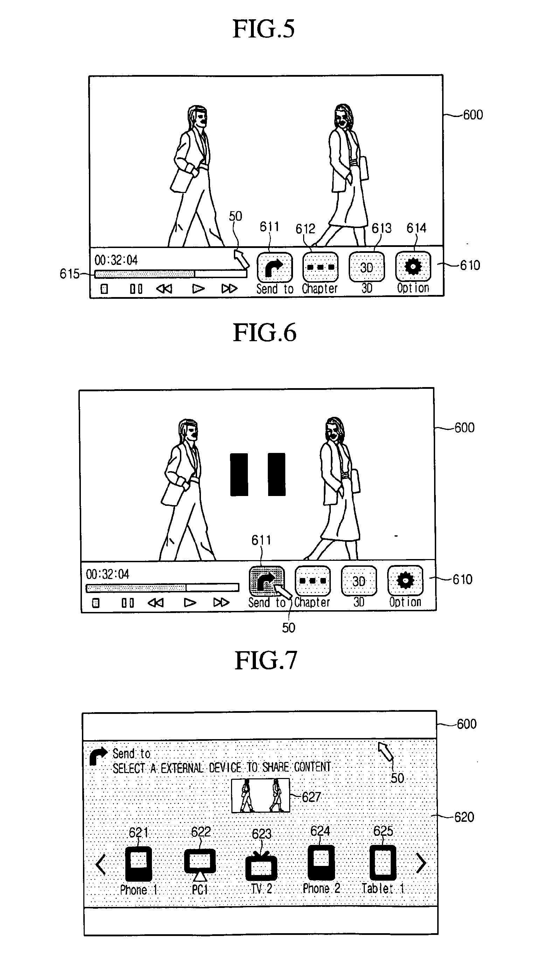

Referring to FIG. 5, in the case in which the user positions a pointer 50 displayed on the screen 600 of the image display device 100 in a certain region on a lower end of the screen 600 using the remote control apparatus 200, a contents menu window 610 may be displayed on the lower end of the screen 600. For example, the user may move the remote control apparatus 200 such as a space remote controller vertically and horizontally or may rotate the remote control apparatus 200. The pointer 50 displayed on the screen 600 of the image display device 100 may be positioned in the certain region of the lower end of the screen 600 corresponding to movements of the remote control apparatus 200 in the 3D space, and the contents menu window 610 may be displayed on the lower end of the screen. The contents menu window 610 may include a progressive bar 615 representing a contents reproduction state and a plurality of selectable icons 611 to 614.

The'Send to' icon 611 included in the contents menu window 610 is an object for transmitting a content that is being reproduced to other external image display device to share the content, a 'Chapter' icon 612 is an object for checking chapter information on the content and selecting a specific chapter, a '3D' icon 613 is an object for reproducing the content as a 3D image mode, and an 'Option' icon 614 is an object for performing settings associated with reproduction of the content.

The plurality of icons 611 to 614 shown in FIG. 5 is a example of a configuration of the contents menu window 610, and the contents menu window may be configured in more various ways including the'Send to' icon 611.

Again, FIG. 4 will be described.

The control unit 170 of the image display device 100 searches for external image display devices capable of sharing contents when the'Send to' icon is selected (step S510) and displays the sharing device list including the searched external image display devices(step S540).

Referring to FIGS. 6 and 7, when the user selects the'Send to' icon 611 displayed in the contents menu window 610 using the pointer 50, the content that is being reproduced is paused, and the sharing device list on the external image display devices capable of sharing contents with the image display device 100. In addition, the control unit 170 may create information on the contents reproduction state at the time in which the 'Send to' icon 611 is selected, such as content title information, content play time information, or the like. For example, when the'Send to' icon 611 is selected, the control unit 170 may search for external image display devices capable of sharing contents through the network interface 133, that is, receiving content data and reproducing the content and display an external device selection window 620 on the screen 600 so that the user may select one of the searched external image display devices.

In addition, the control unit 170 may extract resolution information of each of the searched external image display devices.

Meanwhile, the external device selection window 620 may include device icons 621 to 625 corresponding to each of the searched external image display devices and a thumbnail image 627 of the paused content image.

In addition, the image display device 100 may search for external image display devices whose power is in off state, and the sharing device list may include the external image display devices which are in a powered-off state accordingly.

To this end, although the external image display device is in a powered-off state, the external image display device may be maintain a state in which power is supplied to a communication module (not shown) so as to receive a search signal from the image display device 100 and respond to the received signal

In this case, when the external image display device in powered-off state is selected by the user, the image display device 100 may transmit a 'Wake up' message to the corresponding external image display device in order to power on the selected external image display device. Accordingly, the selected external image display device may be powered on according to the'Wake up' message and then receive contents from the image display device 100. In the case in which resolutions of the image display device 100 and the selected external image display device are different from each other, the image display device 100 may convert resolution of the corresponding contents into resolution capable of being reproduced in the selected external image display device and then transmit the converted file to the selected image display device. In addition, the selected external image display device may receive information on the contents reproduction state from the image display device 100.

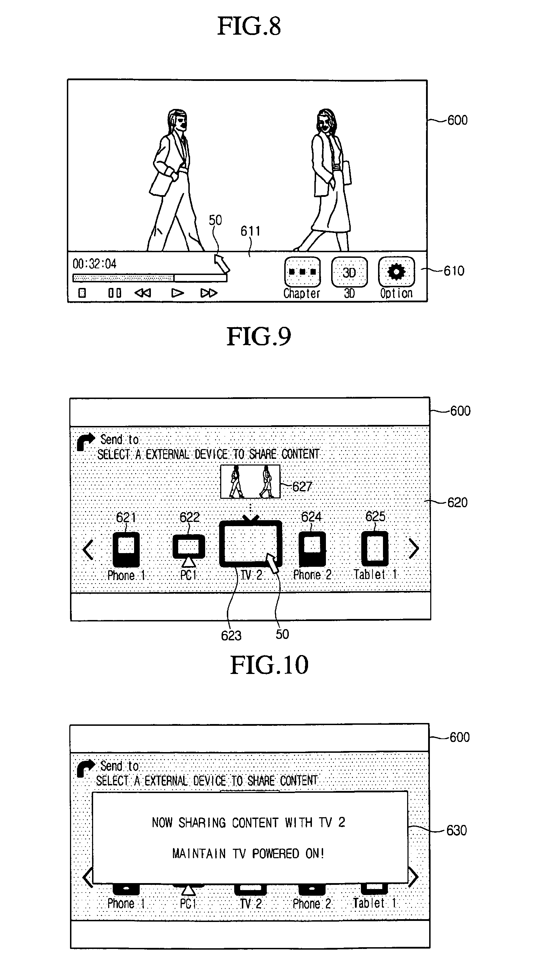

Referring to FIG. 8, in the case in which an external image display device are not searched in step 530, the indication of the'Send to' icon 611 may be ended so that the icon 611 disappears on the screen 600 or deactivated so as not to be selected by the user.

Meanwhile, work to search for external image display devices capable of sharing contents is repeatedly performed according to a preset period, regardless of whether to select the 'Send to' icon 611.

From the search result, when the external image display devices are searched the 'Send to' icon 611 may be deactivated, and when the external image display devices are not searched, the'Send to' icon 611 may disappear or deactivated.

Again, FIG. 4 will be described.

In the user-input interface unit 150 of the image display device 100, the user may select any one of the external image display devices included in the displayed sharing device list (step S550).

Referring to FIG. 9, the user may select a 'TV 2' icon 623 which is one of the device icons 621 to 625 included in the external device selection window 620, such that the content that is being reproduced in the image display device 100 may be transmitted to the 'TV 2'. In the case in which resolutions of the image display device 100 and the 'TV 2' are different from each other, the image display device may convert the corresponding content into resolution suitable for the 'TV 2' and then transmit the converted content. The content transmitted to the 'TV 2' may include information on the contents reproduction state.

In addition, to distinguish the device icons corresponding to the selected external image display devices, for example the 'TV 2' icon 623, from device icons each corresponding to the external image display devices that are not selected, the control unit 170 may change size, shape, color, or the like, of the icons. For example, in the case in which the user selects the 'TV 2' icon 623, the control unit 170 may magnify the size of the 'TV 2' icon 623 and shrink the size of device icons that are not selected 621, 622, 624, and 625 at the same time, such that the 'TV 2' icon 623 may be distinguished from other device icons 621, 622, 624, or 625.

According to another exemplary embodiment of the present invention, shared state information on the image display device 100 or an external image display device selected from the sharing device list may be displayed on the screen 600 of the image display device 100.

The shared state information may include a current progressing state of the contents sharing work that is requested by the user or requirements for the user associated with the contents sharing according to the method described with reference to FIGS. 4 to 9.

Referring to FIG. 10, during the time when the content transmission begins and the content is being reproduced in the external image display device, a pop-up window 630, which informs that power-on state or power standby state of the image display device 100 is to be maintained in order to continuously reproduce the content in the external image display device (for example, the selected 'TV 2'), may be displayed on the screen 600.

The power-on state may mean the state that power is completely supplied in order to make it possible to perform all operations of the image display device 100. The power standby state may mean that power is supplied to make it possible to, among operations of the image display device 100, perform operation to transmit at least one of the information on the content, information on the resolution-converted content, and the information on the contents reproduction state to the external image display device.

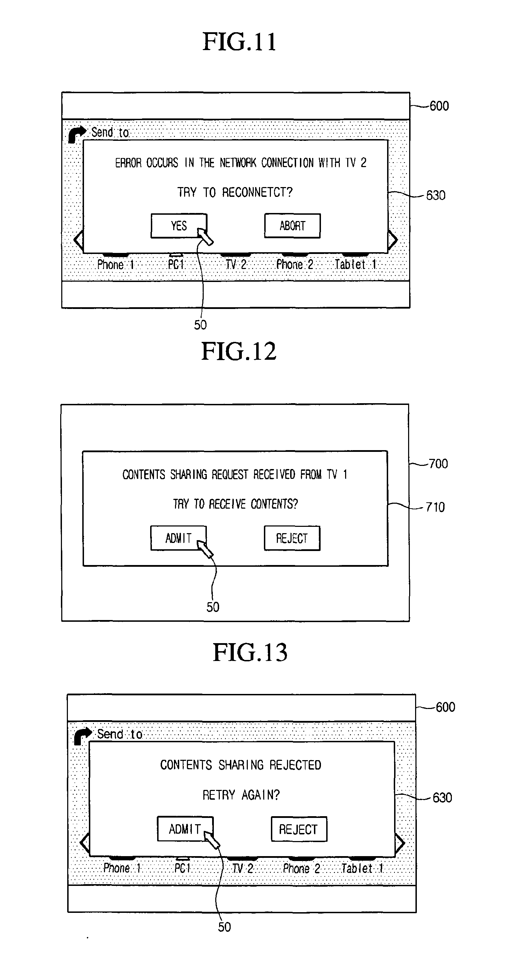

Referring to FIG. 11, in the case in which there is an error in a network to the external image display device for sharing contents, a pop-up window 630 to inform that there is an error in the contents sharing may be displayed on the screen 600.

Meanwhile, when an external image display device to share contents are selected by the user, the image display device 100 may transmit a contents sharing request message to the selected external image display device, and may receive a response message about the request message from the external image display device.

Referring to FIG. 12, on a screen 700 of the selected external image display device a pop-up window 710 which informs that a contents sharing request has been received from the image display device 100, that is, a 'TV 1' and on which user selects whether or not to receive the corresponding content may be displayed.

In this case, when the user selects an 'admit' button, a corresponding response message may be transmitted to the image display device 100, such that sharing through transmitting and receiving contents may begin, a download progress state may be displayed on the screen of the external image display device using a progressive bar, or the like.

Meanwhile, in the case in which the user selects a 'reject button' of the pop-up window 710, a corresponding response message may be transmitted, such that the pop-up window 630 to inform the contents sharing is rejected in the selected external image display device may be displayed as shown FIG. 13.

When contents transmission is completed after the contents sharing has begun according to the above-mentioned method, the paused content may be continuously reproduced, the image display device 100 is powered-off according to preset conditions, or the mode of the image display device 100 may be switched into one of the power standby mode and a sleep mode.

For example, in the case in which a content that is being reproduced on the 'TV 1' positioned in a living room is transmitted to the 'TV 2' positioned in a bedroom and the content are shared by the two TVs, the position of the user may be sensed. Therefore, when the user moves from the living room to the bedroom, the power mode of the 'TV 1' may be switched into one of the standby mode and the sleep mode, or when the user closes watching the shared content and then powers off the 'TV 2', the "TV 1' may be controlled to be powered off at the same time.

In addition, even though the content that is being reproduced in the image display device 100 is changed during the contents sharing, it may not have an effect on the content that has been transmitted to the external image display device and is being shared.

For example, when a 'CH.1' broadcasting program which has been watched on the 'TV 1' is transmitted to the 'TV 2' and the program is being shared by two TVs, although a broadcasting channel of the 'TV 1' is changed into a 'CH.2', the 'CH.1' broadcasting program is continuously transmitted from the'TV 1' to the'TV 2' and continuously reproduced on the 'TV 2'. To this end, the image display device 100 may include two or more tuners.

In this case, in order to transmit a live broadcasting to other external image display device, the image display device may provide streaming service in the form of a file.

Meanwhile, during watching a specific content, for example the live broadcasting, when sharing the content from the image display device 100 begins, the live broadcasting watched previously may be included in the external image display device or stored in the connected storage device (not shown).

According to the contents sharing method of the exemplary embodiment of the present invention as described above, the image display device 100 may provide address information on contents to external image display devices to reproduce the contents on the external image display devices or serve as a digital media center (DMC) controlling content reproducing.

In addition, the image display device 100 may serve as a digital media server (DMS) transmitting contents stored in the storage device such as USB connected thereto or an external HDD to other external image display device.

The contents sharing method according to the present invention described above may be implemented as a computer program that is run in a computer and stored in a recording medium that the computer is capable of reading. Examples of the recording medium that the computer is able to read may include a read only memory (ROM), a read access memory (RAM), a compact-disc ROM (CD-ROM), a magnetic tape, a floppy disk, an optical data storage, or the like, and also an implementation in the form of carrier wave (for example, transmission through the internet).

The recording medium that the computer is capable of reading may be distributed in a computer system connected to a network, and computer readable codes may be stored and performed in a distributed way. In addition, a functional program, codes, and code segments in order to implement the method described above may be easily deduced by computer programmers in the art.

As set forth above, a list of external image display devices capable of sharing contents is displayed using an object displayed on the screen of the image display device, thereby making it possible that the user may easily select the external image display device to share contents and therefore the user may be provided with an optimized contents sharing environment.

Although the preferred embodiments of the present invention have been explained and described, the present invention is not limited to specific embodiments, those skilled in the art will appreciate that various modifications, additions and substitutions are possible, without departing from the scope and spirit of the invention as disclosed in the accompanying claims. Accordingly, such modifications should not be understood separately from the scope or spirit of the present invention.

## Claims

1. A contents sharing method in an image display device comprising:
displaying an object for sharing a content that is being reproduced with an external image display device;
when the object is selected, searching for external image display devices capable of sharing contents;
displaying a sharing device list including at least one of the searched external image display devices;
selecting at least one external image display device from the displayed sharing device list; and
displaying shared state information on at least one of the image display device and the selected external image display device.

2. The contents sharing method according to claim 1, further comprising:
when the object is selected, pausing reproduction of the content; and
displaying a thumbnail image of the paused content image.

3. The contents sharing method according to claim 1, wherein the sharing device list includes an external image display device which is in powered-off state.

4. The contents sharing method according to claim 3, further comprising:
when the external image display device which is in powered-off state is selected, transmitting a message of powering on the selected external image display device to the selected external image display device.

5. The contents sharing method according to claim 1, further comprising:
When the external image display device is not searched, ending or deactivating the display of the object.

6. The contents sharing method according to claim 1, wherein displaying the shared state information includes displaying a pop-up window to inform that one of power-on state or power standby state of the image display device is to be maintained.

7. The contents sharing method according to claim 1, wherein displaying the shared state information includes displaying a pop-up window to inform that the contents sharing is rejected in the selected external image display device.

8. The contents sharing method according to claim 1, wherein displaying the shared state information includes displaying a pop-up window to inform that an error occurs in the contents sharing with the selected external image display device.

9. The contents sharing method according to claim 1, further comprising:
According to at least one of a position of the user and whether or not the contents sharing end, switching power of the image display device into a standby state or an off state.

10. An image display device sharing contents with an external image display device, comprising:
a display unit displaying an object for sharing a content that is being reproduced with an external image display device, and when the object is selected, displaying a sharing device list including at least one of external image display devices capable of sharing contents;
a control unit searching for external image display devices capable of sharing contents and configuring the sharing device list;
a user interface unit which at least one external image display device is selected from the sharing device list by the user input; and
a network interface unit transmitting the content that is being reproduced to the selected external image display device or a contents sharing server.

11. The image display device according to claim 10, wherein the sharing device list includes an external image display device that is in a powered-off state,
When the external image display device that is in a powered-off state is selected, the network interface unit transmits a message of powering on the selected external image display device to the selected external image display device.

12. The image display device according to claim 10, wherein, when the external image display device is not searched, the control unit allows an display of the object to end or be deactivated.

13. The image display device according to claim 10, wherein the display unit displays shared state information on at least one of the image display device and the selected external image display device.

14. The image display device according to claim 10, wherein the network interface unit further transmits information on a reproduction state of the content that is being reproduced to the selected external image display device or the contents sharing server.

15. The image display device according to claim 10, wherein the control unit converts resolution of the content that is being reproduced according to resolution of the external image display device, and the network interface unit transmits the content whose resolution has been converted to the selected external image display device or the contents sharing server.
